(19) Europäisches Patentamt
European Patent Office
Office européen des brevets

(11) **EP 0 970 602 B1**

(12) **FASCICULE DE BREVET EUROPEEN**

(45) Date de publication et mention
de la délivrance du brevet:
**03.12.2003 Bulletin 2003/49**

(51) Int Cl.7: **A01G 25/02**, B29C 47/02

(21) Numéro de dépôt: **98112645.1**

(22) Date de dépôt: **08.07.1998**

(54) **Procédé de fabrication d'un tuyau goutte-à-goutte et ligne de fabrication pour sa mise en oeuvre**

Verfahren zur Herstellung eines Tropfbewässerungsschlauches und Produktionslinie zu seiner Durchführung

Process for manufacturing a drip irrigation hose and production line for carrying it out

(84) Etats contractants désignés:
**AT CH CY DE ES FR GB GR IT LI NL PT**

(43) Date de publication de la demande:
**12.01.2000 Bulletin 2000/02**

(73) Titulaire: **APSwissTech S.A.**
**1462 Yvonand (CH)**

(72) Inventeurs:
• **Lambert, Gilles**
**1569 Montbrelloz (CH)**
• **Buluschek, Bruno**
**1026 Echandens (CH)**

(74) Mandataire: **Nithardt, Roland et al**
**Cabinet Roland Nithardt,**
**Conseils en Propriété Industrielle S.A.,**
**Y-Parc,**
**Rue Galilée 9**
**1400 Yverdon-les-Bains (CH)**

(56) Documents cités:
**EP-A- 0 715 926          EP-A- 0 872 172**
**US-A- 5 271 786          US-A- 5 282 916**
**US-A- 5 324 379          US-A- 5 676 897**

**Description**

La présente invention est relative à la fabrication de tuyaux d'irrigation goutte-à-goutte.

Le document WO-A-9 955 141 appartient à l'état de la technique au titre de l'article 54(3) CBE.

Un procédé de fabrication d'un tel tuyau est déjà décrit dans le brevet européen EP-A-0 872 172 et est du type consistant à:

- fabriquer des goutteurs,
- introduire lesdits goutteurs les uns après les autres à l'intérieur dudit tuyau pendant que celui-ci est formé dans une extrudeuse, puis calibré dans un calibreur, et
- fixer à chaud lesdits goutteurs à la paroi intérieure du tuyau au fur et à mesure de sa progression en aval de ladite extrudeuse puis refroidir ledit tuyau et percer celui-ci au droit de chaque goutteur pour le faire communiquer avec l'extérieur.

Selon ce procédé connu, les goutteurs sont introduits dans le tuyau en formation à l'aide d'un fil sur lequel les goutteurs sont accrochés à distance régulière les uns des autres, la distance entre eux déterminant celle à laquelle ils seront fixés à l'intérieur du tuyau. La force de traction sur la succession de goutteurs résulte de celle exercée par le dernier goutteur qui vient d'être soudé à chaud sur la paroi intérieure du tuyau. Ceci implique que les goutteurs se déplacent à la vitesse du tuyau en progression en amont de leur passage au centre de l'extrudeuse, sinon le fil risque de se rompre. Il en résulte une complication de l'installation, car il faut prévoir des moyens non seulement pour manipuler le fil, mais également pour en éviter la rupture.

Par ailleurs, selon le principe de ce dispositif, le goutteur qui vient d'être soudé à la paroi intérieure du tuyau tire par l'intermédiaire du fil les goutteurs suivants et permet leur avancement. Des essais ont montré que les forces mises en jeu pour la traction des goutteurs suivants conduisent systématiquement à un arrachage plus ou moins important de l'arrière du goutteur qui vient d'être soudé, ce qui rend le tuyau inutilisable.

Un autre inconvénient de ce procédé consiste en ce qu'il ne permet pas de préchauffer de manière satisfaisante la face des goutteurs destinée à venir en contact avec la paroi intérieure du tuyau pour faciliter leur soudage à ce dernier, compte tenu de la vitesse de défilement élevée des goutteurs attachés sur le fil avant le soudage. Cela conduit d'une part à une conception plus complexe des goutteurs (surface de contact avec le tuyau plus faible) et d'autre part à utiliser des matériaux collants ou à point de ramollissement plus bas, mal adaptés à l'injection, ce qui rend la fabrication des goutteurs délicate et coûteuse.

Le document US-A-5 271 786 concerne lui aussi la fabrication de tuyaux d'irrigation.

L'invention a pour but de remédier à ces inconvénients.

Elle a donc pour objet un procédé de fabrication tel que défini dans les revendications.

Grâce à ces caractéristiques, les goutteurs sont amenés individuellement par le guide formant surface d'appui et acquièrent la vitesse du tuyau seulement pendant le court instant où ils subissent le pincement contre la paroi interne du tuyau et pendant qu'ils sont thermosoudés sur sa paroi interne. De ce fait, la ligne de fabrication peut être nettement plus simple. On notera également que la distance entre les goutteurs dans le tuyau fini est obtenue sans autre moyen ou opération supplémentaire.

Selon un mode de réalisation préféré, les goutteurs sont présentés à l'opération de pincement les uns après les autres en étant contigus par leurs extrémités.

Il ainsi possible de faire avancer les goutteurs à la vitesse désirée et de faire varier le pas de fixation des goutteurs dans le tuyau à volonté en augmentant ou diminuant la vitesse d'amenée des goutteurs dans le poste de pincement.

Selon un mode de réalisation avantageux, le procédé de l'invention comprend en outre une étape supplémentaire consistant à préchauffer la face des goutteurs destinée à être tournée vers la paroi intérieure du tuyau avant que ceux-ci soient pincés entre la paroi intérieure du tuyau et les première et deuxième parois antagonistes.

Cela permet notamment de faciliter le soudage du goutteur au tuyau qui ne peut, dans certains cas (faible épaisseur de sa paroi), apporter la quantité de chaleur nécessaire au goutteur pour réaliser un soudage de bonne qualité.

L'invention a également pour objet une ligne de fabrication pour la mise en oeuvre du procédé selon l'invention, telle que définie dans les revendications.

Des caractéristiques complémentaires du procédé et de la ligne de fabrication selon l'invention sont définies dans les revendications dépendantes.

D'autres caractéristiques et avantages de l'invention apparaîtront au cours de la description qui va suivre, donnée uniquement à titre d'exemple et faite en se référant aux dessins annexés sur lesquels :

- la figure 1 est une vue schématique en élévation latérale d'une ligne de fabrication d'un tuyau d'irrigation goutte-à-goutte pour mettre en oeuvre le procédé selon l'invention;
- les figures 2 à 5 sont des coupes prises respectivement selon les lignes A-A, B-B, C-C et D-D de la figure 1, et
- la figure 6 est une vue en section transversale d'un tuyau d'irrigation goutte-à-goutte fabriqué selon une variante du procédé de l'invention.

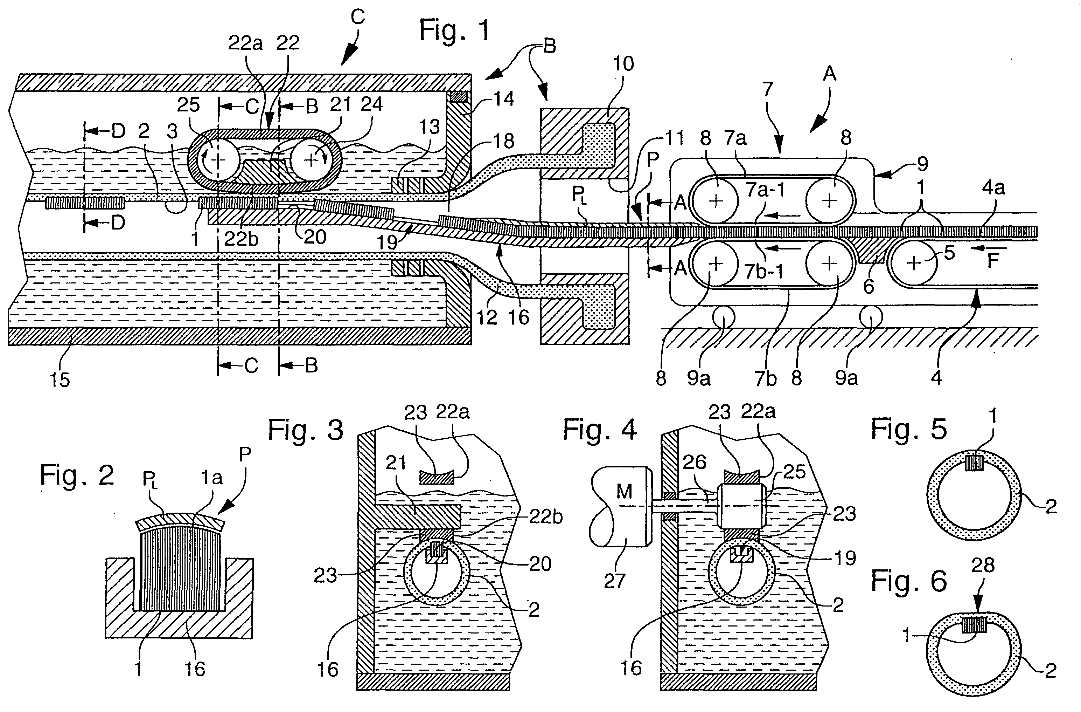

La ligne de fabrication, représentée à titre d'exemple sur la figure 1 pour la mise en oeuvre du procédé de fabrication selon l'invention, comprend un poste d'amenée A de goutteurs 1, un dispositif d'extrusion et de calibrage B du tuyau 2 et un poste de pincement C dans lequel les goutteùrs 1 sont amenés en contact avec la face intérieure du tuyau 2 pour adhérer à celle-ci. Le sens de progression des opérations de fabrication est de droite à gauche sur la figure 1.

En ce qui concerne les goutteurs 1, il convient de noter que tout type de goutteur connu dans la technique peut être utilisé pendant la mise en oeuvre de l'invention, un type particulièrement approprié étant celui qui est décrit dans le brevet européen précité auquel on peut se référer pour plus de détail. Pour le besoin de la présente description, il suffit de noter que les goutteurs ont globalement la forme d'un bloc en parallélépipède rectangle réalisé en matière plastique, et qu'une face déterminée la (figure 2) parmi leurs grandes faces, qui présente de préférence une forme cylindrique légèrement convexe, doit être tournée vers la paroi intérieure 3 du tuyau 2.

C'est pourquoi en amont du poste d'amenée A est disposé un bol vibreur (non représenté et connu en soi) permettant de placer les goutteurs 1 dans le poste d'amenée A en conformité avec la position qu'ils doivent avoir, une fois qu'ils sont introduits dans le tuyau 2, c'est-à-dire, le cas échéant, avec la face la convexe tournée vers le haut.

Le poste d'amenée A comprend une courroie sans fin 4 dont on aperçoit sur la figure 1 la poulie aval 5. La courroie progresse dans le sens de la flèche F et elle est reliée à cet effet à des moyens d'entraînement non représentés, par exemple un moteur électrique. Les goutteurs 1 quittant le bol vibreur sont déposés sur le brin supérieur 4a de la courroie sans fin 4 en se suivant les uns derrière les autres, leurs faces d'extrémité étant contiguës. Un bloc de transfert 6 est prévu en aval de la courroie sans fin 4 pour pousser les goutteurs 1 dans une chenille 7.

Cette dernière comprend deux courroies sans fin 7a et 7b respectivement supérieure et inférieure, les brins adjacents 7a-1 et 7b-1 des deux courroies étant placés à une distance verticale l'un de l'autre égale ou très légèrement inférieure à la hauteur d'un goutteur 1. Les deux courroies 7a et 7b passent sur des poulies respectives 8 et sont entraînées dans le sens des flèches par des moyens moteurs (non représentés) leur imprimant une vitesse linéaire $V_7$.

On notera que le poste d'amenée A comprend une embase 9 sur laquelle sont montées la courroie 4 et la chenille 7 et qui est elle-même déplaçable selon la direction de progression du procédé grâce à des roulettes 9a ou d'autres moyens de roulement appropriés et ce afin de pouvoir régler la position de l'ensemble par rapport au dispositif d'extrusion et de calibrage B qui va maintenant être décrit.

Ce dispositif comprend une tête d'extrusion 10 présentant un alésage central 11 et pouvant être de tout type connu. Elle permet d'ébaucher en continu une ébauche de tuyau 12 qui est amenée dans un calibreur 13 où le tuyau est amené à sa configuration définitive. Le calibreur 13 intègre la paroi amont 14 d'un bac à vide 15 rempli d'un liquide de refroidissement tel que de l'eau.

Un guide 16 est formé par un profilé ayant une section en U (figure 2) ouvert vers le haut, qui mène de l'extrémité aval de la chenille 7 vers l'amont en passant successivement à travers la tête d'extrusion 10, l'ébauche 12 du tuyau 2 et le calibreur 13. Le passage défini par ce profilé 16 est de section rectangulaire dont les dimensions correspondent à la section extérieure des goutteurs 1. On rappelle que les goutteurs représentés sur les figures 1 à 5 peuvent avoir une face supérieure légèrement convexe comme on le voit en particulier en la sur la figure 2. Toutefois, cette forme peut être choisie en fonction des besoins, les goutteurs pouvant revêtir d'autres formes, voire présenter des imperfections de forme comme des bavures résultant du moulage des déformations ou autres irrégularités sans que cela ait un effet défavorable sur le bon déroulement du procédé de fabrication selon l'invention.

Le guide 16 s'étend au delà du calibreur 13 dans le tuyau 2. A la hauteur de l'entrée du calibreur 13, le fond du guide 16 se relève progressivement vers l'aval en formant une rampe 19 pour, à l'extrémité du guide, se transformer en une surface horizontale d'appui 20.

Au-dessus de la surface d'appui 20 du guide 16, la paroi du bac à vide 15 présente une console ou sabot fixe 21 s'étendant horizontalement vers l'intérieur et formant un contre-appui. Cette console 21 s'étend transversalement entre les brins supérieur 22a et inférieur 22b d'une courroie sans fin 22, étant entendu que le brin inférieur 22b est en contact de la face inférieure de la console 21, la courroie sans fin 22 étant disposée en aval du calibreur et de préférence immédiatement à la sortie de ce dernier. Le profil de la courroie sans fin peut être adapté à la forme de la face la du goutteur (forme plate ou convexe), mais de préférence la surface de la courroie 22a présente une consistance molle, ce qui peut être obtenu en la revêtant d'un garnissage 23 en caoutchouc ou en matière mousse, une mousse de polyuréthane par exemple pouvant convenir à cet effet.

La courroie passe sur deux poulies 24 et 25, l'une d'entre elles 25 étant couplée, par une broche 26 traversant la paroi du bac 15, à un moteur d'entraînement 27 qui entraîne la courroie dans le sens des flèches.

La ligne de fabrication représentée aux figures comprend en outre un poste de préchauffage P des goutteurs 1, disposé entre le poste d'amenée A des goutteurs 1 et ledit poste de pincement C. Ce poste de préchauffage P comprend des moyens de préchauffage qui s'étendent depuis le poste d'amenée A à travers ledit poste d'extrusion jusque dans le poste de calibrage B. Dans l'exemple de réalisation décrit, les moyens de préchauffage sont des moyens de chauffage électriques à résistance qui comportent une lame métallique $P_1$ et

s'étendent au-dessus dudit guide 16 depuis ledit poste d'amenée A jusque dans ledit poste de calibrage en traversant le poste d'extrusion, la lame $P_1$ étant reliée en court-circuit à une source de tension électrique (non représentée).

On notera à ce propos que la lame $P_1$ présente de préférence un profil qui épouse la forme de la face des goutteurs qui est destinée à être soudée à la paroi intérieure du tuyau (figure 2). Pour fixer les idées, l'épaisseur de la lame $P_1$ est par exemple de l'ordre de 0,2 mm et cette lame permet de chauffer les goutteurs 1 à une température comprise entre 90° et 160 °C et de préférence à une température de l'ordre de 140°C.

De préférence, la lame $P_1$ est élastique et est fixée à une extrémité du guide 16. On notera également que la lame $P_1$ est agencée pour appliquer, de préférence élastiquement, les goutteurs 1 dans le fond du guide 16. Ainsi les goutteurs sont en contact permanent et étroit avec la lame $P_1$, ce qui permet un préchauffage efficace de ceux-ci.

Le déroulement du procédé de fabrication est le suivant.

La courroie sans fin 4 amène en continu des goutteurs 1 qu'elle reçoit d'un dispositif de détermination d'attitude (non représenté) tel qu'un bol vibreur. La vitesse de la courroie 4 est ajustée à une valeur $V_1$ choisie supérieure à la vitesse maximale $V_1$ à laquelle les goutteurs peuvent progresser dans la ligne de fabrication. Il en résulte que les goutteurs glissent sur la surface de la courroie 4.

Etant transférés dans la chenille 7, les goutteurs 10 sont amenés à une vitesse prédéfinie $V_7$ qui est choisie à une valeur très inférieure à celle de la vitesse $V_2$ à laquelle le tuyau 2 progresse à travers le calibreur 13 et la partie aval de la ligne de fabrication.

Au cours de cette progression, la face des goutteurs destinées à être tournée vers la paroi intérieure du tuyau 2 avant que ceux-ci soient pincés entre la paroi intérieure du tuyau et lesdites première et deuxième parois antagonistes est préchauffée.

La température de préchauffage dépend de la nature du matériau des goutteurs et est comprise généralement entre 90° et 160°C et de préférence de l'ordre de 140°C.

On choisit de préférence une valeur pour la vitesse $V_7$ de telle manière que :

$$V_7 = V_2 \cdot l/d$$

dans laquelle l est la longueur d'un goutteur 1 et d la distance de laquelle deux goutteurs successifs doivent être espacés dans le tuyau fini. Par exemple, si $V_2$ = 100 m/min, 1 = 30 mm et d = 1 m, la vitesse de la courroie 7 sera $V_7$ = 3 m/min. Ce calcul démontre qu'il est possible selon l'invention de réaliser un préchauffage efficace des goutteurs avant leur soudage au tuyau.

Les goutteurs 1 sont ainsi poussés dans le guide 16 où ils progressent à la vitesse $V_7$ et ce sans être en contact avec le tuyau 2 en formation mais en contact avec la lame élastique $P_1$ du dispositif de préchauffage, jusqu'à ce qu'ils arrivent en haut de la rampe 19 et s'engagent sur la surface d'appui 20. En arrivant sur cette surface, les goutteurs viennent en contact avec la paroi intérieure 3 du tuyau qui présente une vitesse linéaire $V_2$ et sont entraînés à cette même vitesse.

On notera au passage qu'on a constaté que le soudage contre la surface interne du tuyau est meilleur que dans les procédés classiques. Ceci est dû, d'une part, au fait que le tuyau lui-même saisit chaque goutteur et l'amène à sa propre vitesse $V_2$ et, d'autre part, au fait que les goutteurs sont préchauffés.

La courroie 22 tourne à une vitesse linéaire $V_{22}$ sensiblement égale à la vitesse $V_2$ du tuyau 2 à cet endroit. Ainsi, pendant un court instant, chaque goutteur 1 est pris en sandwich entre la surface d'appui 20 et la surface interne du tuyau 2, ce dernier étant à son tour en appui, mais sans frottement, contre le brin inférieur 22b de la courroie 22. Comme ce brin inférieur 22b est lui-même en appui contre la surface inférieure de la console 21, il se produit un pincement du goutteur 1 et de la partie de paroi du tuyau se trouvant à cet instant dans le poste de pincement C, d'où il résulte une fixation par soudage à chaud du goutteur à la paroi intérieure du tuyau.

Compte tenu de la mollesse du garnissage 23 de la courroie 22, celle-ci épouse sans difficulté la forme qu'imprime la face 1a du goutteur au tuyau 2. La forme de cette face la peut donc être choisie en fonction des besoins sans que l'on ait à changer de courroie. En particulier, sa face peut être convexe comme cela est représenté à la figure 2, mais également plate comme le montre la figure 6. En outre, des défauts de forme du goutteur n'ont pas d'influence sur la qualité de la fixation par soudage du goutteur sur la paroi 3 du tuyau 2.

La figure 6 montre en outre que dans le cas où la face du goutteur en contact avec le tuyau 2 est plate, la forme finale du tuyau peut présenter en section un tronçon rectiligne 28. Ceci peut être avantageux pour signaler à l'utilisateur d'un tuyau conforme à l'invention les endroits où se trouve un goutteur.

Le fait de presser chaque goutteur 1 contre la paroi intérieure 3 du tuyau 2 au moment du soudage, c'est-à-dire lorsque le tuyau est encore mou et chaud, fait qu'une partie du goutteur fond et se soude contre le tuyau. De préférence, la face de contact du goutteur est spécialement dessinée pour favoriser cette opération.

Par ailleurs, le refroidissement du tuyau 2 dans le calibreur 13 et en dessous de la courroie 22 fait que l'extérieur du tuyau est déjà refroidi, alors que l'intérieur est encore chaud compte tenu de la mauvaise conductibilité des matières plastiques. En outre, à cet endroit, le tuyau n'a encore été que très peu en contact avec l'eau de refroidissement.

On notera que le fait que l'extérieur du tuyau soit déjà durci au moment où le goutteur vient en contact avec l'intérieur du tuyau encore chaud permet de limiter de façon importante les risques de percement du tuyau en formation. Pour fixer les idées pour un tuyau ayant une paroi 0,2 mm d'épaisseur, la pénétration des goutteurs est de l'ordre d'un dixième de millimètre plus ou moins cinq centièmes.

Le tuyau 2 équipé de ses goutteurs 1 quitte ensuite le bac 15, passe de façon classique par des bacs de refroidissement, un sécheur, un dispositif de percement pour pratiquer les orifices au droit des goutteurs et un dispositif d'enroulement.

Il va de soi que l'invention n'est pas limitée au mode de réalisation qui vient d'être décrit et que des modifications ou variantes peuvent être envisagées sans sortir du cadre des revendications. On pourra notamment envisager d'omettre le préchauffage des goutteurs avant le soudage. Dans ce cas, le guide 16 pourrait présenter la forme d'un tube dont le passage interne serait ajusté à la forme des goutteurs, ce tube présentant une ouverture au droit du calibreur.

L'invention présente de nombreux avantages. Grâce à au procédé et à la ligne de fabrication qui viennent d'être décrits, il n'est pas nécessaire d'adapter le rayon de courbure de la face du goutteur destinée à être tournée vers la paroi du tuyau au diamètre de ce dernier, et donc à celui du calibreur. En effet, la consistance molle ou souple de la courroie sans fin 22 lui permet de s'adapter à la forme du goutteur, qui peut le cas échéant être déformé. Cela permet un soudage homogène du goutteur sur le tuyau sans risquer de le détériorer, ce qui serait le cas si de tels goutteurs étaient amenés en contact avec le tuyau dans le calibreur, c'est-à-dire contre une surface rigide.

L'invention rend donc le rayon de courbure des goutteurs indépendant du diamètre des tuyaux à fabriquer et permet ainsi d'éliminer le problème de gestion et de fabrication des goutteurs.

## Revendications

**Revendications pour les Etats contractants suivants : AT, CH, DE, ES, FR, GB, GR, IT, NL, PT**

1. Procédé de fabrication d'un tuyau d'irrigation goutte-à-goutte (2), consistant à :

   - fournir des goutteurs (1),
   - introduire lesdits goutteurs (1) les uns après les autres à l'intérieur dudit tuyau (2) pendant que celui-ci est formé dans une extrudeuse (10), puis calibré dans un calibreur (13),
   - fixer à chaud lesdits goutteurs (1) à la paroi intérieure du tuyau (2) au fur et à mesure de sa progression en aval de ladite extrudeuse (10), puis refroidir ledit tuyau (2) et percer celui-ci au droit de chaque goutteur (1) pour le faire communiquer avec l'extérieur,
   - ladite opération de fixation à chaud étant exécutée en aval dudit calibreur (13) par pincement du goutteur (1) et de la paroi intérieure (3) dudit tuyau (2) entre des surfaces antagonistes (20, 22b) dont la première surface (22b) est entraînée à la vitesse de progression du tuyau (2)et est partiellement en appui contre un organe fixe (21) et dont la deuxième surface (20) est ménagée sur un organe d'appui fixe (16), formant guide d'amenée pour les goutteurs (1), de façon à définir une surface d'appui.

2. Procédé de fabrication selon la revendication 1, **caractérisé en ce que** lesdits goutteurs (1) sont présentés à l'opération de pincement les uns après les autres en étant contigus par leurs extrémités.

3. Procédé de fabrication selon l'une des revendications 1 ou 2, **caractérisé en ce que** la vitesse d'amenée $V_7$ à laquelle lesdits goutteurs (1) progressent dans ledit guide (16) répond à la relation suivante:

$$V_7=V_2.l/d$$

dans laquelle 1 est la longueur d'un goutteur, d la distance entre deux goutteurs et $V_2$ la vitesse de progression du tuyau (2).

4. Procédé de fabrication selon l'une quelconque des revendications 1 à 3, **caractérisé en ce que** ladite première surface antagoniste (22b) est conformée de manière à s'adapter à la forme de la face (la) de chaque goutteur (1) destinée à être tournée vers la paroi intérieure (3) du tuyau (2).

5. Procédé de fabrication selon la revendication 4, **caractérisé en ce que** ladite première surface (22b) est apte à s'adapter à une forme quelconque de ladite face (la) du goutteur (1).

6. Procédé de fabrication selon l'une quelconque des revendications précédentes, **caractérisé en ce que** l'opération de pincement est exécutée immédiatement en aval de ladite opération de calibrage, de préférence dans le liquide de refroidissement du tuyau (2).

7. Procédé de fabrication selon l'une quelconque des revendications précédentes, **caractérisé en ce qu'**il comprend en outre une étape supplémentaire consistant à préchauffer la face des goutteurs destinée à être tournée vers la paroi intérieure (3) du tuyau (2) avant que ceux-ci soient pincés entre la paroi intérieure du tuyau et lesdites première et deuxième surfaces antagonistes (20, 22b).

**8.** Procédé de fabrication selon la revendication 7, **caractérisé en ce que** l'étape de préchauffage consiste à préchauffer les goutteurs à une température comprise entre 90° et 160°C et de préférence à approximativement 140°C.

**9.** Ligne de fabrication destinée à la mise en oeuvre du procédé tel que défini dans l'une quelconque des revendications précédentes, comprenant un poste d'amenée (A) de goutteurs (1), suivi d'un poste d'extrusion et de calibrage (B) dudit tuyau (2), d'un poste de refroidissement (15) de celui-ci et d'un poste de perçage du tuyau, un poste de pincement (C) étant prévu en aval dudit poste d'extrusion et de calibrage (B) pour, au cours d'une opération de fixation à chaud, presser chaque goutteur (1) contre la paroi intérieure (3) dudit tuyau (2), un guide (16) pour les goutteurs (1), formé d'un organe d'appui fixe, reliant ledit poste d'amenée (A) audit poste de pincement (C) en traversant ledit poste d'extrusion et de calibrage (B), ledit guide définissant une surface d'appui (20) pour lesdits goutteurs (1) dans ledit poste de pincement (C), ledit poste de pincement comprenant une courroie sans fin (22) dont l'un des brins est destiné à se deplacer à la vitesse de progression du tuyau (2) dans la direction dudit tuyau (2) et dont la surface est ladite première surface antagoniste(22b) à ladite surface d'appui (20) avec interposition de la paroi dudit tuyau (2), un organe fixe (21) étant interposé entre les brins de ladite courroie sans fin (22) pour offrir une surface d'appui pour ledit brin de cette courroie qui est en contact avec ledit tuyau (2).

**10.** , Ligne de fabrication selon la revendication 9, **caractérisée en ce que** ladite courroie sans fin (22) est pourvue d'un moteur d'entraînement (27) pour l'entraîner à la vitesse d' avance V2 dudit tuyau.

**11.** Ligne de fabrication selon la revendication 9 ou 10, **caractérisée en ce que** ledit poste de pincement (C) est placé dans le liquide de refroidissement dudit poste de refroidissement (15) et **en ce que** ledit organe fixe (21) est fixé sur la structure de ce poste de refroidissement.

**12.** Ligne de fabrication selon l'une quelconque des revendications 9 à 11, **caractérisée en ce que** ladite courroie (22) est revêtue d'une matière mousse (23).

**13.** Ligne de fabrication selon l'une quelconque des revendications 9 à 12, **caractérisée en ce que** ledit guide (16) comprend un profilé ayant une section en forme de U ouvert vers le haut et dont le passage interne est ajusté à la forme desdits goutteurs (1), et **en ce que** ce guide présente au droit du calibreur (13) dudit poste d'extrusion et de calibrage (B) une surface en rampe (19) pour conduire lesdits goutteurs (2) vers ladite surface d'appui (20) du guide (16).

**14.** Ligne de fabrication selon l'une quelconque des revendications 9 à 13, **caractérisée en ce qu'**elle comprend en outre un poste de préchauffage des goutteurs, disposé entre le poste d'amenée (A) des goutteurs (1) et ledit poste de pincement (C).

**15.** Ligne de fabrication selon la revendication 14, **caractérisée en ce que** ledit poste de préchauffage comprend des moyens de préchauffage qui s'étendent depuis le poste d'amenée (A) à travers ledit poste d'extrusion jusque dans le poste de calibrage (B).

**16.** Ligne de fabrication selon la revendication 15, **caractérisée en ce que** les moyens de préchauffage sont des moyens de chauffage électriques à résistance.

**17.** Ligne de fabrication selon la revendication 16 lorsque celle-ci dépend de la revendication 13, **caractérisée en ce que** lesdits moyens de chauffage comprennent une lame métallique ($P_1$) s'étendant au-dessus dudit guide (16) depuis ledit poste d'amenée (A) jusque dans ledit poste de calibrage à travers le poste d'extrusion, ladite lame ($P_1$) étant reliée en court-circuit à une source de tension électrique.

**18.** Ligne de fabrication selon la revendication 17, **caractérisée en ce que** ladite lame ($P_1$) est élastique et fixée à une extrémité dudit guide (16) et **en ce qu'**elle est agencée pour appliquer les goutteurs (1) dans le fond dudit guide (16).

**Revendications pour l'Etat contractant suivant : CY**

**1.** Procédé de fabrication d'un tuyau d'irrigation goutte-à-goutte (2), consistant à :

-   fournir des goutteurs (1),
-   introduire lesdits goutteurs (1) les uns après les autres à l'intérieur dudit tuyau (2) pendant que celui-ci est formé dans une extrudeuse (10), puis calibré dans un calibreur (13),
-   fixer à chaud lesdits goutteurs (1) à la paroi intérieure du tuyau (2) au fur et à mesure de sa progression en aval de ladite extrudeuse (10), puis refroidir ledit tuyau (2) et percer celui-ci au droit de chaque goutteur (1) pour le faire communiquer avec l'extérieur,

ledit procédé étant **caractérisé en ce que**

- le contact initial entre les goutteurs (1) et le tuyau (2) ainsi que ladite opération de fixation à chaud sont exécutés en aval dudit calibreur (13) par pincement du goutteur (1) et de la paroi intérieure(3) dudit tuyau (2) entre des surfaces antagonistes (20, 22b) dont la première surface (22b) est entraînée à la vitesse de progression du tuyau (2) et dont la deuxième surface (20) est ménagée sur un organe d'appui fixe (16), formant guide d'amenée pour les goutteurs (1), de façon à définir une surface d'appui.

2. Procédé de fabrication selon la revendication 1, **caractérisé en ce que** lesdits goutteurs (1) sont présentés à l'opération de pincement les uns après les autres en étant contigus par leurs extrémités.

3. Procédé de fabrication selon la revendication 1 ou 2, **caractérisé en ce que** ladite première surface d'appui (22b) est elle-même partiellement en appui contre un organe fixe (21).

4. Procédé de fabrication selon l'une quelconque des revendications 1 à 3, **caractérisé en ce que** la vitesse d'amenée $V_7$ à laquelle lesdits goutteurs (1) progressent dans ledit guide (16) répond à la relation suivante:

$$V_7 = V_2 . l/d$$

dans laquelle l est la longueur d'un goutteur, d la distance entre deux goutteurs et $V_2$ la vitesse de progression du tuyau (2).

5. Procédé de fabrication selon l'une quelconque des revendications 1 à 4, **caractérisé en ce que** ladite première surface antagoniste (22b) est conformée de manière à s'adapter à la forme de la face (1a) de chaque goutteur (1) destinée à être tournée vers la paroi intérieure (3) du tuyau (2).

6. Procédé de fabrication selon la revendication 5, **caractérisé en ce que** ladite première surface (22b) est apte à s'adapter à une forme quelconque de ladite face (1a) du goutteur (1).

7. Procédé de fabrication selon l'une quelconque des revendications précédentes, **caractérisé en ce que** l'opération de pincement est exécutée immédiatement en aval de ladite opération de calibrage, de préférence dans le liquide de refroidissement du tuyau (2).

8. Procédé de fabrication selon l'une quelconque des revendications précédentes, **caractérisé en ce qu'**il comprend en outre une étape supplémentaire consistant à préchauffer la face des goutteurs destinée à être tournée vers la paroi intérieure (3) du tuyau (2) avant que ceux-ci soient pincés entre la paroi intérieure du tuyau et lesdites première et deuxième surfaces antagonistes (20, 22b).

9. Procédé de fabrication selon la revendication 8, **caractérisé en ce que** l'étape de préchauffage consiste à préchauffer les goutteurs à une température comprise entre 90° et 160°C et de préférence à approximativement 140°C.

10. Ligne de fabrication destinée à la mise en oeuvre du procédé tel que défini dans l'une quelconque des revendications précédentes, comprenant un poste d'amenée (A) de goutteurs (1), suivi d'un poste d'extrusion et de calibrage (B) dudit tuyau (2), d'un poste de refroidissement (15) de celui-ci et d'un poste de perçage du tuyau, **caractérisée en ce qu'**en aval dudit poste d'extrusion et de calibrage (B) est prévu un poste de pincement (C) pour, au cours d'une opération de fixation à chaud, amener en contact et presser chaque goutteur (1) contre la paroi intérieure (3) dudit tuyau (2), **en ce qu'**un guide (16) pour les goutteurs (1), formé d'un organe d'appui fixe, relie ledit poste d'amenée (A) audit poste de pincement (C) en traversant ledit poste d'extrusion et de calibrage (B), ledit guide définissant une surface d'appui (20) pour lesdits goutteurs (1) dans ledit poste de pincement (C) et **en ce que** ledit poste de pincement comprend une courroie sans fin (22) dont l'un des brins est destiné à se déplacer à la vitesse de progression du tuyau (2) dans la direction dudit tuyau (2) et dont la surface est ladite première surface antagoniste (22b) à ladite surface d'appui (20) avec interposition de la paroi dudit tuyau (2).

11. Ligne de fabrication selon la revendication 10, **caractérisée en ce que** ladite courroie sans fin (22) est pourvue d'un moteur d'entraînement (27) pour l'entraîner à la vitesse d'avance V2 dudit tuyau.

12. Ligne de fabrication selon l'une quelconque des revendications 10 et 11, **caractérisée en ce qu'**un organe fixe (21) est interposé entre les brins de ladite courroie sans fin (22) pour offrir une surface d'appui pour ledit brin de cette courroie qui est en contact avec ledit tuyau (2).

13. Ligne de fabrication selon la revendication 12, **caractérisée en ce que** ledit poste de pincement (C) est placé dans le liquide de refroidissement dudit poste de refroidissement (15) et **en ce que** ledit organe fixe (21) est fixé sur la structure de ce poste de refroidissement.

14. Ligne de fabrication selon l'une quelconque des revendications 10 à 13, **caractérisée en ce que** ladite courroie (22) est revêtue d'une matière mousse (23).

15. Ligne de fabrication selon l'une quelconque des revendications 10 à 14, **caractérisée en ce que** ledit guide (16) comprend un profilé ayant une section en forme de U ouvert vers le haut et dont le passage interne est ajusté à la forme desdits goutteurs (1), et **en ce que** ce guide présente au droit du calibreur (13) dudit poste d'extrusion et de calibrage (B) une surface en rampe (19) pour conduire lesdits goutteurs (2) vers ladite surface d'appui (20) du guide (16).

16. Ligne de fabrication selon l'une quelconque des revendications 10 à 15, **caractérisée en ce qu'**elle comprend en outre un poste de préchauffage des goutteurs, disposé entre le poste d'amenée (A) des goutteurs (1) et ledit poste de pincement (C).

17. Ligne de fabrication selon la revendication 16, **caractérisée en ce que** ledit poste de préchauffage comprend des moyens de préchauffage qui s'étendent depuis le poste d'amenée (A) à travers ledit poste d'extrusion jusque dans le poste de calibrage (B).

18. Ligne de fabrication selon la revendication 17, **caractérisée en ce que** les moyens de préchauffage sont des moyens de chauffage électriques à résistance.

19. Ligne de fabrication selon la revendication 18 lorsque celle-ci dépend de la revendication 15, **caractérisée en ce que** lesdits moyens de chauffage comprennent une lame métallique ($P_1$) s'étendant au-dessus dudit guide (16) depuis ledit poste d'amenée (A) jusque dans ledit poste de calibrage à travers le poste d'extrusion, ladite lame ($P_1$) étant reliée en court-circuit à une source de tension électrique.

20. Ligne de fabrication selon la revendication 19, **caractérisée en ce que** ladite lame ($P_1$) est élastique et fixée à une extrémité dudit guide (16) et **en ce qu'**elle est agencée pour appliquer les goutteurs (1) dans le fond dudit guide (16).

**Patentansprüche**

**Patentansprüche für folgende Vertragsstaaten : AT, CH, DE, ES, FR, GB, GR, IT, NL, PT**

1. Verfahren für die Herstellung eines Tropfenbewasserungsschlauchs (2), das darin besteht:

- Tropfeinrichtungen (1) bereitzustellen,
- die Tropfeinrichtungen (1) nacheinander in den Schlauch (2) einzuführen, während dieser in einer Extrudiereinrichtung (10) gebildet und dann in einer Kalibriereinrichtung (13) auf Mass gebracht wird,
- die Tropfeinrichtungen (1) an der Innenwand des Schlauchs (2) nach Massgabe seiner Vorwärtsbewegung am Ausgang der Extrudiereinrichtung (10) heisszubefestigen, dann den Schlauch (2) abzukühlen und diesen am Ort jeder Tropfeinrichtung (1) zu durchstechen, um eine Verbindung zwischen dieser und der äusseren Umgebung herzustellen,
- wobei der Heissbefestigungsvorgang am Auslass der Kalibriereinrichtung (13) durch Einklemmen der Tropfeinrichtung (1) und der Innenwand (3) des Schlauchs (2) zwischen zwei gegenüberliegende Oberflächen (20, 22b) erfolgt, wobei die erste Oberfläche (22b) mit der Vorschubgeschwindigkeit des Schlauchs (2) angetrieben wird und sich teilweise an einem festen Element (21) abstützt und wobei die zweite Oberfläche (20) auf einem festen Abstützelement (16) ausgebildet ist, das eine Versorgungsführung für die Tropfeinrichtungen (1) bildet, derart, dass eine Abstützoberfläche definiert wird.

2. Herstellungsverfahren nach Anspruch 1, **dadurch gekennzeichnet, dass** die Tropfeinrichtungen (1) dem Einklemmvorgang nacheinander zugeführt werden, wobei ihre Enden aneinanderstossen.

3. Herstellungsverfahren nach einem der Ansprüche 1 oder 2, **dadurch gekennzeichnet, dass** die Zuführungsgeschwindigkeit $V_7$, mit der die Tropfeinrichtungen (1) in der Führung (16) vorgeschoben werden, die folgende Beziehung erfüllt:

$$V_7 = V_2 \cdot l/d$$

wobei I die Lange einer Tropfeinrichtung ist, d der Abstand zwischen zwei Tropfeinrichtungen ist und $V_2$ die Vorschubgeschwindigkeit des Schlauchs (2) ist.

4. Herstellungsverfahren nach einem der Ansprüche 1 bis 3, **dadurch gekennzeichnet, dass** die erste gegenüberliegende Oberfläche (22b) so beschaffen ist, dass sie sich an die Form der Fläche (1 a) jeder Tropfeinrichtung (1), die der Innenwand (3) des Schlauchs (2) zugewandt werden soll, anpasst.

5. Herstellungsverfahren nach Anspruch 4, **dadurch gekennzeichnet, dass** sich die erste Oberfläche (22b) an eine beliebige Form der Fläche (1a) der Tropfeinrichtung (1 ) anpassen kann.

6. Herstellungsverfahren nach einem der vorhergehenden Ansprüche, **dadurch gekennzeichnet, dass** der Einklemmvorgang unmittelbar hinter dem Kalibrierungsvorgang, vorzugsweise in der Kühlungsflüssigkeit für den Schlauch (2) ausgeführt wird.

7. Herstellungsverfahren nach einem der vorhergehenden Ansprüche, **dadurch gekennzeichnet, dass** es ausserdem einen zusätzlichen Schritt umfasst, bei dem die Fläche der Tropfeinrichtungen, die der Innenwand (3) des Schlauchs (2) zugewandt werden soll, vorgewärmt wird, bevor diese zwischen die Innenwand des Schlauchs und die ersten und zweiten gegenüberliegenden Oberflächen (20, 22b) eingeklemmt werden.

8. Herstellungsverfahren nach Anspruch 7, **dadurch gekennzeichnet, dass** der Vorwärmschritt darin besteht, die Tropfeinrichtung auf eine Temperatur im Bereich von 90 und 160 °C und vorzugsweise auf eine Temperatur von etwa 140 °C zu erwärmen.

9. Fertigungsstrasse, die dazu bestimmt ist, das Verfahren nach einem der vorhergehenden Ansprüche auszuführen, umfassend eine Station (A) für die Zuführung von Tropfeinrichtungen (1 ), der eine Station (B) zum Extrudieren und Kalibrieren des Schlauchs (2), eine Station (15) für dessen Abkühlung sowie eine Station für das Durchstechen des Schlauchs folgen, wobei am Auslass der Extrudierund Kalibrierstation (B) eine Einklemmstation (C) vorgesehen ist, um während eines Heissbefestigungsvorgangs jede Tropfeinrichtung (1) gegen die Innenwand (3) des Schlauchs (2) zu pressen, wobei eine aus einem festen Abstützelement gebildete Führung (16) für die Tropfeinrichtungen (1 ) die Zuführstation (A) mit der Einklemmstation (C) verbindet, indem sie durch die Extrudier- und Kalibrierstation (B) verlauft, wobei die Führung eine Abstützoberfläche (20) für die Tropfeinrichtungen (1 ) in der Einklemmstation (C) definiert, wobei die Einklemmstation einen Endlosriemen (22) umfasst, wovon ein Zweig dazu bestimmt ist, sich mit der Vorschubgeschwindigkeit des Schlauchs (2) in Richtung des Schlauchs (2) zu bewegen und wovon die Oberfläche die erste Oberfläche (22b) ist, die der Abstützoberfläche (20) über die Wand des Schlauchs (2) gegenüberliegt, wobei zwischen die Zweige des Endlosriemens (22) ein festes Element (21) eingesetzt ist, die eine Abstützoberfläche für jenen Zweig dieses Riemens, der mit dem Schlauch (2) in Kontakt ist, schafft.

10. Fertigungsstrasse nach Anspruch 9, **dadurch gekennzeichnet, dass** der Endlosriemen (22) mit einem Antriebsmotor (27) versehen ist, um ihn mit der Vorschubgeschwindigkeit $V_2$ des Schlauchs anzutreiben.

11. Fertigungsstrasse nach Anspruch 9 oder 10, **dadurch gekennzeichnet, dass** die Einklemmstation (C) in der Abkühlflüssigkeit der Abkühlstation (15) angeordnet ist und dass das feste Element (21) an der Struktur dieser Abkühlstation befestigt ist.

12. Fertigungsstrasse nach einem der Ansprüche 9 bis 11, **dadurch gekennzeichnet, dass** der Riemen (22) mit einem Schaumstoff (23) beschichtet ist.

13. Fertigungsstrasse nach einem der Ansprüche 9 bis 12, **dadurch gekennzeichnet, dass** die Führung (16) ein Profil mit einem U-förmigen Querschnitt besitzt, der nach oben offen ist und dessen Innendurchlass an die Form der Tropfeinrichtungen (1) angepasst ist, und dass diese Führung am Ort der Kalibriereinrichtung (13) der Extrudier- und Kalibrierstation (B) eine Rampenoberfläche (19) aufweist, die die Tropfeinrichtungen (2) zur Abstützoberfläche (20) der Führung (16) führt.

14. Fertigungsstrasse nach einem der Ansprüche 9 bis 13, **dadurch gekennzeichnet, dass** sie ausserdem eine Vorwärmstation für die Tropfeinrichtungen umfasst, die zwischen der Zuführstation (A) für die Tropfeinrichtungen (1 ) und der Einklemmstation (C) angeordnet ist.

15. Fertigungsstrasse nach Anspruch 14, **dadurch gekennzeichnet, dass** die Vorwärmstation Vorwärmmittel umfasst, die sich von der Zuführungsstation (A) durch die Extrudierstation bis zur Kalibrierstation (B) erstrecken.

16. Fertigungsstrasse nach Anspruch 15, **dadurch gekennzeichnet, dass** die Vorwärmmittel elektrische Widerstandsheizmittel sind.

17. Fertigungsstrasse nach Anspruch 16, wenn abhängig von Anspruch 13, **dadurch gekennzeichnet, dass** die Heizmittel ein Metallplättchen ($P_L$) umfassen, das sich oberhalb der Führung (16) von der Zuführstation (A) durch die Extrudierstation bis zur Kalibrierstation erstreckt, wobei das Plättchen ($P_L$) mit einer elektrischen Spannungsquelle kurzgeschlossen ist.

18. Fertigungsstrasse nach Anspruch 17, **dadurch gekennzeichnet, dass** das Plättchen ($P_L$) elastisch ist und an einem Ende der Führung (16) befestigt ist und dass es so beschaffen ist, dass es die Tropfeinrichtungen (1 ) in den Boden der Führung (16) drückt.

**Patentansprüche für folgenden Vertragsstaat : CY**

1. Verfahren für die Herstellung eines Tropfenbewässerungsschlauchs (2), das darin besteht:

   - Tropfeinrichtungen (1) bereitzustellen,
   - die Tropfeinrichtungen (1) nacheinander in den Schlauch (2) einzuführen, während dieser in einer Extrudiereinrichtung (10) gebildet und dann in einer Kalibriereinrichtung (13) auf Mass gebracht wird,
   - die Tropfeinrichtungen (1) an der Innenwand des Schlauchs (2) nach Massgabe seiner Vorwärtsbewegung am Ausgang der Extrudiereinrichtung (10) heisszubefestigen, dann den Schlauch (2) abzukühlen und diesen am Ort jeder Tropfeinrichtung (1) zu durchstechen, um eine Verbindung zwischen dieser und der äusseren Umgebung herzustellen,

   welches Verfahren **dadurch gekennzeichnet ist, dass**

   - der anfängliche Kontakt zwischen den Tropfeinrichtungen (1) und dem Schlauch (2) sowie der Heissbefestigungsvorgang am Auslass der Kalibriereinrichtung (13) durch Einklemmen der Tropfeinrichtung (1) und der Innenwand (3) des Schlauchs (2) zwischen zwei gegenüberliegende Oberflächen (20, 22b) erfolgen, wobei die erste Oberfläche (22b) mit der Vorschubgeschwindigkeit des Schlauchs (2) angetrieben wird und wobei die zweite Oberfläche (20) auf einem festen Abstützelement (16) ausgebildet ist, das eine Versorgungsführung für die Tropfeinrichtungen (1) bildet, derart, dass eine Abstützoberfläche definiert wird.

2. Herstellungsverfahren nach Anspruch 1, **dadurch gekennzeichnet, dass** die Tropfeinrichtungen (1 ) dem Einklemmvorgang nacheinander zugeführt werden, wobei ihre Enden aneinanderstossen.

3. Herstellungsverfahren nach Anspruch 1 oder 2, **dadurch gekennzeichnet, dass** sich die erste Abstützoberfläche (22b) selbst teilweise an einem festen Element (21) abstützt.

4. Herstellungsverfahren nach einem der Ansprüche 1 bis 3, **dadurch gekennzeichnet, dass** die Zuführungsgeschwindigkeit $V_7$, mit der die Tropfeinrichtungen (1) in der Führung (16) vorgeschoben werden, die folgende Beziehung erfüllt:

$$V_7 = V_2 \cdot l/d$$

wobei I die Länge einer Tropfeinrichtung ist, d der Abstand zwischen zwei Tropfeinrichtungen ist und $V_2$ die Vorschubgeschwindigkeit des Schlauchs (2) ist.

5. Herstellungsverfahren nach einem der Ansprüche 1 bis 4, **dadurch gekennzeichnet, dass** die erste gegenüberliegende Oberfläche (22b) so beschaffen ist, dass sie sich an die Form der Fläche (1a) jeder Tropfeinrichtung (1), die der Innenwand (3) des Schlauchs (2) zugewandt werden soll, anpasst.

6. Herstellungsverfahren nach Anspruch 5, **dadurch gekennzeichnet, dass** sich die erste Oberfläche (22b) an eine beliebige Form der Fläche (1a) der Tropfeinrichtung (1) anpassen kann.

7. Herstellungsverfahren nach einem der vorhergehenden Ansprüche, **dadurch gekennzeichnet, dass** der Einklemmvorgang unmittelbar hinter dem Kalibrierungsvorgang, vorzugsweise in der Kühlungsflüssigkeit für den Schlauch (2) ausgeführt wird.

8. Herstellungsverfahren nach einem der vorhergehenden Ansprüche, **dadurch gekennzeichnet, dass** es ausserdem einen zusätzlichen Schritt umfasst, bei dem die Fläche der Tropfeinrichtungen, die der Innenwand (3) des Schlauchs (2) zugewandt werden soll, vorgewärmt wird, bevor diese zwischen die Innenwand des Schlauchs und die ersten und zweiten gegenüberliegenden Oberflächen (20, 22b) eingeklemmt werden.

9. Herstellungsverfahren nach Anspruch 8, **dadurch gekennzeichnet, dass** der Vorwärmschritt darin besteht, die Tropfeinrichtung auf eine Temperatur im Bereich von 90 ° und 160 °C und vorzugsweise auf eine Temperatur von etwa 140 °C zu erwärmen.

10. Fertigungsstrasse, die dazu bestimmt ist, das Verfahren nach einem der vorhergehenden Ansprüche auszuführen, umfassend eine Station (A) für die Zuführung von Tropfeinrichtungen (1), der eine Station (B) zum Extrudieren und Kalibrieren des Schlauchs (2), eine Station (15) für dessen Abkühlung sowie eine Station für das Durchstechen des Schlauchs folgen, **dadurch gekennzeichnet, dass** am Auslass der Extrudier- und Kalibrierstation (B) eine Einklemmstation (C) vorgesehen ist, um während eines Heissbefestigungsvorgangs jede Tropfeinrichtung (1) mit der Innenwand (3) des Schlauchs (2) in Kontakt zu bringen und sie dagegen zu pressen, dass eine aus einem festen Abstützelement gebildete Führung (16) für die Tropfeinrichtungen (1) die Zuführstation (A) mit der Einklemmstation (C) verbindet, indem sie durch die Extrudier- und Kalibrierstation (B) verläuft, wobei die Führung eine Abstützoberfläche (20) für die Tropfeinrichtungen (1)

in der Einklemmstation (C) definiert, und dass die Einklemmstation einen Endlosriemen (22) umfasst, wovon ein Zweig dazu bestimmt ist, sich mit der Vorschubgeschwindigkeit des Schlauchs (2) in Richtung des Schlauchs (2) zu bewegen und wovon die Oberfläche die erste Oberfläche (22b) ist, die der Abstützoberfläche (20) über die Wand des Schlauchs (2) gegenüberliegt.

11. Fertigungsstrasse nach Anspruch 10, **dadurch gekennzeichnet, dass** der Endlosriemen (22) mit einem Antriebsmotor (27) versehen ist, um ihn mit der Vorschubgeschwindigkeit V$_2$ des Schlauchs anzutreiben.

12. Fertigungsstrasse nach einem der Ansprüche 10 und 11, **dadurch gekennzeichnet, dass** ein festes Element (21) zwischen die Zweige des Endlosriemens (22) eingesetzt ist, um eine Abstützoberfläche für jenen Zweig dieses Riemens, der mit dem Schlauch (2) in Kontakt ist, zu schaffen.

13. Fertigungsstrasse nach Anspruch 12, **dadurch gekennzeichnet, dass** die Einklemmstation (C) in der Abkühlflüssigkeit der Abkühlstation (15) angeordnet ist und dass das feste Element (21) an der Struktur dieser Abkühlstation befestigt ist.

14. Fertigungsstrasse nach einem der Ansprüche 10 bis 13, **dadurch gekennzeichnet, dass** der Riemen (22) mit einem Schaumstoff (23) beschichtet ist.

15. Fertigungsstrasse nach einem der Ansprüche 10 bis 14, **dadurch gekennzeichnet, dass** die Führung (16) ein Profil mit einem U-förmigen Querschnitt besitzt, der nach oben offen ist und dessen Innendurchlass an die Form der Tropfeinrichtungen (1) angepasst ist, und dass diese Führung am Ort der Kalibriereinrichtung (13) der Extrudier- und Kalibrierstation (B) eine Rampenoberfläche (19) aufweist, die die Tropfeinrichtungen (2) zur Abstützoberfläche (20) der Führung (16) führt.

16. Fertigungsstrasse nach einem der Ansprüche 10 bis 15, **dadurch gekennzeichnet, dass** sie ausserdem eine Vorwärmstation für die Tropfeinrichtungen umfasst, die zwischen der Zuführstation (A) für die Tropfeinrichtungen (1 ) und der Einklemmstation (C) angeordnet ist.

17. Fertigungsstrasse nach Anspruch 16, **dadurch gekennzeichnet, dass** die Vorwärmstation Vorwärmmittel umfasst, die sich von der Zuführungsstation (A) durch die Extrudierstation bis zur Kalibrierstation (B) erstrecken.

18. Fertigungsstrasse nach Anspruch 17, **dadurch ge-**

**kennzeichnet, dass** die Vorwärmmittel elektrische Widerstandsheizmittel sind.

19. Fertigungsstrasse nach Anspruch 18, wenn abhängig von Anspruch 15, **dadurch gekennzeichnet, dass** die Heizmittel ein Metallplättchen (P$_L$) umfassen, das sich oberhalb der Führung (16) von der Zuführstation (A) durch die Extrudierstation bis zur Kalibrierstation erstreckt, wobei das Plättchen (P$_L$) mit einer elektrischen Spannungsquelle kurzgeschlossen ist.

20. Fertigungsstrasse nach Anspruch 19, **dadurch gekennzeichnet, dass** das Plättchen (P$_L$) elastisch ist und an einem Ende der Führung (16) befestigt ist und dass es so beschaffen ist, dass es die Tropfeinrichtungen (1) in den Boden der Führung (16) drückt.

**Claims**

**Claims for the following Contracting States : AT, CH, DE, ES, FR, GB, GR, IT, NL, PT**

1. Manufacturing method for a drip irrigation conduit (2) of the type comprising the steps of:

   - manufacturing dripper units (1),
   - introducing said dripper units (1) one after the other inside said conduit (2) while the latter is being formed in an extruder (10), then calibrated in a calibrator (13),
   - heat welding said dripper units (1) to the inner wall of the conduit (2) during its progression downstream from said extruder (10) then cooling said conduit (2) and perforating the latter opposite each dripper unit (1) to make it communicate with the exterior,
   - said heat welding step being executed downstream of said calibrator (13) by pinching the dripper unit (1) and the inner wall (3) of said conduit (2) between opposing surfaces (20, 22b), the first surface of which (22b) is driven at the speed of progression of the conduit (2) and is partially abutting against a fixed member (21) and the other surface (20) is arranged on a fixed support element (16) forming a feed guide for the dripper units (1), in order to define a support surface.

2. Manufacturing method according to claim 1, **characterised in that** said dripper units (1) are presented for the pinching step one after the other contiguously by their ends.

3. Manufacturing method according to either claims 1 or 2, **characterised in that** the feed speed $V_7$ at which said dripper units (1) progress in said guide (16) follows the following relationship:

$$V_7 = V_2 \cdot l/d$$

where l is the length of a dripper unit, d the distance between two dripper units and $V_2$ the speed of progression of the conduit (2).

4. Manufacturing method according to any one of claims 1 to 3, **characterised in that** said first opposing surface (22b) is shaped so as to adapt to the shape of the face (1a) of each dripper unit (1) intended to be turned towards the inner wall (3) of the conduit (2).

5. Manufacturing method according to claim 4, **characterised in that** said first surface (22b) is able to adapt to any shape of said face (1a) of the dripper unit (1).

6. Manufacturing method according to any one of the preceding claims, **characterised in that** the pinching step is executed immediately downstream of said calibrating step, preferably in the cooling liquid for the conduit (2).

7. Manufacturing method according to any one of the preceding claims, **characterised in that** it further includes an additional step consisting in preheating the face of the dripper units intended to be turned towards the inner wall (3) of the conduit (2) before said dripper units are pinched between the inner wall of the conduit and said first and second opposing surfaces (20, 22b).

8. Manufacturing method according to claim 7, **characterised in that** the preheating step consists in preheating the dripper units to a temperature comprised between 90° and 160°C and preferably to approximately 140°C.

9. Manufacturing line intended for the implementation of the method as defined in any one of the preceding claims, including a feed station (A) for the dripper units (1), followed by a station (B) for the extrusion and calibration of said conduit (2), a conduit cooling station (15) and a conduit perforation station, a pinching station (C) being provided downstream of said extrusion and calibration station (B) for pressing each dripper unit (1) against the inner wall (3) of said conduit (2) during a heat welding step, a guide (16) for the dripper units (1) linking said feed station (A) to said pinching station (C) passing through said extrusion and calibration station (B), said guide defining a support surface (20) for said dripper units (1) in said pinching station (C), said pinching station (C) including an endless conveyor belt (22) one of whose strands (22b) is intended to move at the speed of progression of said conduit (2) in the direction of said conduit (2) and whose surface is said first opposing surface (22b) to said support surface (20) with the interposition of the wall of said conduit (2), a fixed member (21) being interposed between the strands (22a, 22b) of said endless conveyor belt (22) to provide a support surface for the strand (22b) of said belt which is in contact with said conduit (2).

10. Manufacturing line according to claim 9, **characterised in that** said endless conveyor belt (22) is provided with a driving motor (27) for driving it at the speed of progression $V_2$ of said conduit.

11. Manufacturing line according to claim 9 or 10, **characterised in that** said pinching station (C) is placed in the cooling liquid of said cooling station (15) and **in that** said fixed member (21) is fixed onto the structure of said cooling station.

12. Manufacturing line according to any one of claims 9 to 11, **characterised in that** said belt (22) is coated with a foam material (23).

13. Manufacturing line according to any one of claims 9 to 12, **characterised in that** said guide (16) includes a U section member which is open upwards and whose inner passage is adjusted to the shape of said dripper units (1), and **in that** said guide has opposite the calibrator (13) of said extrusion and calibration station (B) a ramp surface (19) to lead said dripper units (2) towards said support surface (20) of the guide (16).

14. Manufacturing line according to any one of claims 9 to 13, **characterised in that** it further includes a dripper unit preheating station, arranged between the feed station (A) for the dripper units (1) and said pinching station (C).

15. Manufacturing line according to claim 14, **characterised in that** said preheating station includes preheating means which extend from the feed station (A) through said extrusion station to inside the calibration station (B).

16. Manufacturing line according to claim 15, **characterised in that** the preheating means are electric resistor heating means.

17. Manufacturing line according to claim 16 when it depends on claim 13, **characterised in that** said heating means include a metal plate ($P_L$) extending above said guide (16) from said feed station (A) to inside said calibration station through the extrusion station, said plate (P_L) being connected in short circuit to an electric voltage source.

18. Manufacturing line according to claim 17, **characterised in that** said plate (P_L) is elastic and fixed to one end of said guide (16) and **in that** it is arranged to apply the dripper units (1) onto the bottom of said guide (16).


**Claims for the following Contracting State : CY**

1. Manufacturing method for a drip irrigation conduit (2) of the type comprising the steps of:

   - manufacturing dripper units (1),
   - introducing said dripper units (1) one after the other inside said conduit (2) while the latter is being formed in an extruder (10), then calibrated in a calibrator (13),
   - heat welding said dripper units (1) to the inner wall of the conduit (2) during its progression downstream from said extruder (10), then cooling said conduit (2) and perforating the latter opposite each dripper unit (1) to make it communicate with the exterior,

      said method being **characterised in that**:

   - the initial contact between the dripper units (1) and the conduit (2) as well as said heat welding step are executed downstream of said calibrator (13) by pinching said dripper unit (1) and the inner wall (3) of said conduit (2) between opposing surfaces (20, 22b), the first surface of which (22b) is driven at the speed of progression of the conduit (2) and the second surface of which (20) is arranged on a fixed support element (16) forming a feed guide for the dripper units (1), in order to define a support surface.

2. Manufacturing method according to claim 1, **characterised in that** said dripper units (1) are presented for the pinching step one after the other contiguously by their ends.

3. Manufacturing method according to claim 1 or 2, **characterised in that** said first opposing surface (22b) is itself partially abutting against a fixed member (21).

4. Manufacturing method according to any of claims 1 to 3, **characterised in that** the feed speed $V_7$ at which said dripper units (1) progress in said guide (16) follows the following relationship:

$$V_7 = V_2 . l/d$$

where I is the length of a dripper unit, d the distance between two dripper units and $V_2$ the speed of progression of the conduit (2).

5. Manufacturing method according to any one of claims 1 to 4 , **characterised in that** said first opposing surface (22b) is shaped so as to adapt to the shape of the face (1a) of each dripper unit (1) intended to be turned towards the inner wall (3) of the conduit (2).

6. Manufacturing method according to claim 5, **characterised in that** said first surface (22b) is able to adapt to any shape of said face (1a) of the dripper unit (1).

7. Manufacturing method according to any one of the preceding claims, **characterised in that** the pinching step is executed immediately downstream of said calibrating step, preferably in the cooling liquid for the conduit (2).

8. Manufacturing method according to any one of the preceding claims, **characterised in that** it further includes an additional step consisting in preheating the face of the dripper units intended to be turned towards the inner wall (3) of the conduit (2) before said dripper units are pinched between the inner wall of the conduit and said first and second opposing surfaces (20, 22b).

9. Manufacturing method according to claim 8, **characterised in that** the preheating step consists in preheating the dripper units to a temperature comprised between 90° and 160°C and preferably to approximately 140°C.

10. Manufacturing line intended for the implementation of the method as defined in any of the preceding claims, including a feed station (A) for the dripper units (1), followed by a station (B) for the extrusion and calibration of said conduit (2), a conduit cooling station (15) and a conduit perforating station, **characterised in that**, downstream of said extrusion and calibration station (B), a pinching station (C) is provided for bringing into contact and pressing each dripper unit (1) against the inner wall (3) of said conduit (2) during a heat welding step, **in that** a guide (16) for the dripper units (1), formed by a fixed support element, links said feed station (A) to said pinching station (C) passing through said extrusion and calibration station (B), said guide defining a support surface (20) for said dripper units (1) in said pinching station (C), and **in that** said pinching station (C) includes an endless conveyor belt (22) one of whose strands (22b) is intended to move at the speed of progression of the conduit in the direction of said conduit (2) and whose surface is said first opposing surface to said support surface (20) with the interposition of the wall of said conduit (2).

11. Manufacturing line according to claim 10, **characterised in that** said endless conveyor belt (22) is provided with a driving motor (27) for driving it at the speed of progression $V_2$ of said conduit.

12. Manufacturing line according to either of claims 10 or 11, **characterised in that** a fixed member (21) is interposed between the strands of said endless conveyor belt (22) to provide a support surface for the strand of said belt which is in contact with said conduit (2).

13. Manufacturing line according to claim 12, **characterised in that** said pinching station (C) is placed in the cooling liquid of said cooling station (15) and **in that** said fixed member (21) is fixed onto the structure of said cooling station.

14. Manufacturing line according to any one of claims 10 to 13, **characterised in that** said belt (22) is coated with a foam material (23).

15. Manufacturing line according to any one of claims 10 to 14, **characterised in that** said guide (16) includes a U section member which is open upwards and whose inner passage is adjusted to the shape of said dripper units (1), and **in that** said guide has opposite the calibrator (13) of said extrusion and calibration station (B) a ramp surface (19) to lead said dripper units (2) towards said support surface (20) of the guide (16).

16. Manufacturing line according to any one of claims 10 to 15, **characterised in that** it further includes a dripper unit preheating station, arranged between the feed station (A) for the dripper units (1) and said pinching station (C).

17. Manufacturing line according to claim 16, **characterised in that** said preheating station includes preheating means which extend from the feed station (A) through said extrusion station to inside the calibration station (B).

18. Manufacturing line according to claim 17, **characterised in that** the preheating means are electric resistor heating means.

19. Manufacturing line according to claim 18 when it depends on claim 15, **characterised in that** said heating means include a metal plate ($P_L$) extending above said guide (16) from said feed station (A) to inside said calibration station through the extrusion station, said plate ($P_L$) being connected in short circuit to an electric voltage source.

20. Manufacturing line according to claim 19, **characterised in that** said plate ($P_L$) is elastic and fixed to one end of said guide (16) and **in that** it is arranged to apply the dripper units (1) onto the bottom of said guide (16).

Fig. 1

Fig. 2

Fig. 3

Fig. 4

Fig. 5

Fig. 6